# EUROPÄISCHE PATENTSCHRIFT

(11) **EP 2 258 523 B1**
(45) Veröffentlichungstag und Bekanntmachung des Hinweises auf die Patenterteilung: **23.11.2011**
(21) Anmeldenummer: 10005530.0
(22) Anmeldetag: 27.05.2010
(51) Int. Cl.: B26D 7/06, B65G 15/00

(54) **Vorrichtung und Verfahren zum Aufschneiden von Lebensmittelprodukten**
Method and device for cutting food products
Dispositif et procédé destinés à la coupe de produits alimentaires

(30) Priorität: 03.06.2009 DE 102009023729
(43) Veröffentlichungstag der Anmeldung: 08.12.2010
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-A2- 0 713 753
- WO-A2-2005/037501
- US-A- 3 605 837
- US-A1- 2005 077 152

## Beschreibung

Die vorliegende Erfindung betrifft eine Vorrichtung und ein Verfahren zum Aufschneiden von Lebensmittelprodukten.

Im Stand der Technik sind verschiedenartige Lebensmittel-Schneidvorrichtungen bekannt. Es werden beispielsweise so genannte Hochleistungs-Slicer eingesetzt, um Lebensmittelprodukte, wie z.B. Fleisch, Wurst oder Käse, mit hoher Schnittgeschwindigkeit aufzuschneiden. In dem Bemühen, die Schnittleistung weiter zu erhöhen, können derartige Vorrichtungen eine Produktzuführung aufweisen, die dazu ausgebildet ist, mehrere Produktlaibe oder Produktriegel - im Folgenden einfach: Produkte - parallel nebeneinander einem gemeinsamen Schneidmesser zuzuführen, das sich in einer Schneidebene bewegt, die senkrecht zur Produktförderrichtung verläuft. Auf diese Weise ist es möglich, eine einzige Schneidvorrichtung - mit entsprechend großem Messer - zum gleichzeitigen Schneiden mehrerer Produkte zu nutzen.

Ein derartiger Hochleistungs-Slicer mit unabhängigen Produktzuführungen für zwei parallel zu fördernde und somit gleichzeitig aufzuschneidende Produkte ist in der gattungsgebenden europäischen Patentschrift EP 0713 753 B1 beschrieben. Bei diesem Slicer wird jedes aufzuschneidende Produkt mittels einer eigenen angetriebenen Greifkralle, die am hinteren Produktende angreift, in Richtung des Messers geschoben. Die Greifkrallen weisen jeweils einen eigenen Antrieb auf und sind demgemäß vollkommen unabhängig voneinander mit unterschiedlichen Vorschubgeschwindigkeiten antreibbar, sodass es möglich ist, die Dicke der abgetrennten Produktscheiben für die geförderten Produkte mittels der einzelnen Produktzuführantriebe unabhängig voneinander während des Aufschneidens zu verändern.

Slicer mit voneinander unabhängigen Produktzuführantrieben für zwei gleichzeitig aufzuschneidende Produkte sind außerdem aus US 3,605,837 und US 3,927,319 bekannt. Jedes Produkt ist hierbei während des Aufschneidens zwischen zwei gegenüberliegenden Endlosbandförderern eingeklemmt, die vertikal orientiert sind und das Produkt sowohl halten als auch mit einer veränderbaren Zuführrate einer Schneidebene zuführen können. Jedes für jeweils ein Produkt vorgesehene Paar von Endlosbandförderern besitzt einen eigenen Antrieb für die Produktzufuhr, wobei die Antriebe vollkommen unabhängig voneinander sind, sodass die Produktzuführraten der aufzuschneidenden Produkte unabhängig voneinander verändert werden können.

Problematisch bei diesen bekannten Vorrichtungen ist vor allem der relativ hohe Aufwand, der zum Bereitstellen mehrerer voneinander unabhängiger Antriebe einschließlich der zugehörigen Ansteuerungseinrichtungen notwendig ist.

Es ist daher eine Aufgabe der Erfindung, das gleichzeitige Aufschneiden mehrerer parallel geförderter Lebensmittelprodukte zu vereinfachen, wobei für jedes Produkt die Dicke der abgetrennten Produktscheiben individuell veränderbar sein soll.

Die Aufgabe wird zum einen durch eine Vorrichtung mit den Merkmalen des Anspruchs 1 gelöst.

Die erfindungsgemäße Vorrichtung weist eine Produktzuführung auf, die mehrere parallel nebeneinander angeordnete Bandförderer umfasst, die jeweils einen als Produktauflage für ein aufzuschneidendes Produkt dienenden Endlosbandgurt umfassen und gemeinsam antreibbar sind, um gleichzeitig mehrere Produkte, die jeweils auf einem der Bandgurte aufliegen, einer Schneidebene zuzuführen, in der sich wenigstens ein Schneidmesser, insbesondere rotierend und/oder umlaufend, bewegt. Die Bandförderer weisen einen gemeinsamen Antrieb auf, der eine Antriebswelle umfasst, durch welche die auf den Bandgurten aufliegenden Produkte der Schneidebene mit einer gemeinsamen Basisfördergeschwindigkeit zuführbar sind. Die Bandgurte sind weiterhin durch elastische Dehnung in der Länge veränderbar und laufen in einem gedehnten Zustand um, sodass die Einzelfördergeschwindigkeit jedes Bandgurtes außer von der Drehzahl der Antriebswelle auch von dessen Dehnungsgrad abhängig ist. Jedem Bandgurt ist eine Einstellvorrichtung zugeordnet, die dazu ausgebildet ist, den Dehnungsgrad des Bandgurtes und damit dessen Einzelfördergeschwindigkeit individuell zu verändern.

Erfindungsgemäß wurde erkannt, dass bei Schneidvorrichtungen der gattungsgemäßen Art in der Praxis meist hinsichtlich ihrer äußeren Form weitgehend übereinstimmende Produkte aufzuschneiden sind, welche lediglich in einem relativ geringen Ausmaß bezüglich ihres Querschnitts variieren. Um entweder einzelne Produktscheiben oder Portionen von Produktscheiben gleichen Gewichts zu produzieren, können die Produkte also im Wesentlichen mit der gleichen Geschwindigkeit gefördert werden, wobei lediglich relativ geringfügige Anpassungen zur exakten Einhaltung des vorgegebenen Scheiben- oder Portionsgewichts erforderlich sind. Diese Anpassungen sind nicht nur für jedes Produkt selbst relativ geringfügig, sondern liegen außerdem für alle gleichzeitig aufzuschneidenden Produkte in der gleichen Größenordnung. Diesen Umstand nutzt die Erfindung aus.

Somit lässt sich erfindungsgemäß der Konstruktions- und Herstellungsaufwand beträchtlich reduzieren, indem ein Satz von parallelen Bandförderern vorgesehen wird, welche gemeinsam angetrieben, aber individuell einstellbar sind. Es ist dazu ein gemeinsamer Antrieb mit einer Antriebswelle vorgesehen, wobei die Drehzahl der Antriebswelle eine gemeinsame Basisfördergeschwindigkeit vorgibt. Die genaue individuelle Anpassung der Einzelfördergeschwindigkeit eines jeden Bandförderers erfolgt dann durch einen Einstellvorgang am Bandgurt selbst.

Dabei wird erfindungsgemäß die Erkenntnis genutzt, dass die Bandgeschwindigkeit außer von der Drehzahl der Antriebswelle auch vom Dehnungszustand des Bandgurtes an der jeweiligen Stelle abhängig ist. Daher kann die Bandgeschwindigkeit und somit die Produktfördergeschwindigkeit jedes einzelnen Bandgurtes beeinflusst werden, indem der Bandgurt mittels einer Einstellvorrichtung entweder weiter gedehnt oder entspannt wird.

Jede Einstellvorrichtung kann dazu ausgebildet sein, den Dehnungsgrad des Bandgurtes durch Verkleinern und Vergrößern des Laufweges für den Bandgurt zu verändern. Durch das Variieren des Laufwegs wird der elastische Bandgurt entsprechend gelängt oder gekürzt, wodurch sich bei gleichbleibender Drehzahl der Antriebswelle die gewünschte Bandgeschwindigkeitsänderung ergibt.

Gemäß einer weiteren Ausführungsform umfasst jede Einstellvorrichtung eine Spannvorrichtung für den Bandgurt. Somit kann jeder der Bandgurte individuell entweder weiter gespannt oder entspannt werden, um so auf einfache Weise die Einzelfördergeschwindigkeit des Bandgurtes zu verändern. Wenn man eine Betrachtung anstellt, die von einem der Basisfördergeschwindigkeit entsprechenden Dehnungsgrad des Bandgurtes ausgeht, kann also mittels der Einstellvorrichtung für den Bandgurt eine jeweils gewünschte Abweichung von der Basisfördergeschwindigkeit herbeigeführt werden.

Vorzugsweise ist der Dehnungsgrad jedes Bandgurtes während des Aufschneidebetriebs bei umlaufendem Bandgurt veränderbar. Das Anpassen der Einzelfördergeschwindigkeit kann somit gewissermaßen "online" erfolgen, ohne dass eine Verzögerung oder Unterbrechung des fortlaufenden Schneidebetriebs nötig wäre. Insbesondere können so auch Produkte mit einer in Längsrichtung veränderlichen Querschnittsform unter Beibehaltung eines einheitlichen Scheiben- oder Portionsgewichts aufgeschnitten werden, was eine ständige Anpassung der Einzelfördergeschwindigkeit während des Aufschneidens erfordert.

Gemäß einer weiteren Ausführungsform ist für jeden Bandgurt dessen Einzelfördergeschwindigkeit mittels der Einstellvorrichtung in einem Bereich veränderbar, dessen Grenzen dadurch bestimmt sind, dass die Basisfördergeschwindigkeit um ein bestimmtes maximales Maß reduzierbar und erhöhbar ist. Der jeweilige aktuelle Wert der Einzelfördergeschwindigkeit kann also für jeden der Bandförderer um einen gemeinsamen Wert variieren, der durch die Basisfördergeschwindigkeit gegeben ist. In Bezug auf den Dehnungsgrad der Bandgurte bedeutet dies, dass in einem Grundzustand, welcher der Basisfördergeschwindigkeit entspricht, jeder der Bandgurte bereits eine gewisse Vorspannung aufweist, damit ein ausreichender "Dehnungspuffer" für eine möglicherweise erforderliche Reduzierung der Einzelfördergeschwindigkeit zur Verfügung steht. Der Dehnungsgradänderung sind unter anderem insofern Grenzen gesetzt, als ein Durchhängen des Bandgurtes einerseits sowie eine Überdehnung andererseits zu vermeiden sind. Die Basisfördergeschwindigkeit wird also gewissermaßen nur mit relativ geringer Bandbreite verändert. Beispielsweise ist die Basisfördergeschwindigkeit um bis zu 20 % reduzierbar und um bis zu 20 % erhöhbar.

Der Dehnungsgrad jedes Bandgurtes kann insbesondere stufenlos veränderbar sein, um eine exakte Anpassung der jeweiligen Einzelfördergeschwindigkeit an die aktuellen Gegebenheiten bzw. jeweiligen Erfordernisse zu gewährleisten.

Bevorzugt steht jeder Bandgurt in formschlüssigem Eingriff mit der Antriebswelle oder mit einer von der Antriebswelle antreibbaren Antriebsrolle. Durch den formschlüssigen Antrieb wird unerwünschter Schlupf vermieden. Gemäß einer Ausführungsform ist jeder Bandgurt als Zahnriemen ausgebildet. Die zugehörige Antriebswelle oder Antriebsrolle weist dementsprechend eine zu dem Zahnriemen passende Zahnung auf. Die Verzahnung zwischen Antrieb und Bandgurt sorgt dafür, dass der umlaufende Bandgurt nicht gleichmäßig gedehnt ist. Die Dehnung erfolgt in den freien Trumabschnitten, während im Wirkbogen der Antriebswelle oder Antriebsrolle der Dehnungsgrad auf dem durch die Verzahnung vorgegebenen Niveau gehalten wird. Wenn man den Bandgurt segmentweise betrachtet, wird somit jedes Bandgurtsegment unmittelbar beim Ablaufen von der Antriebswelle oder Antriebsrolle gedehnt und im Verlauf des Wiedereinschnäbelns zum Ausgleich dementsprechend gestaucht oder entspannt. Wird der Bandgurt stärker gedehnt, muss jeder Punkt auf dem Bandgurt im Ergebnis eine längere Strecke zurücklegen als vorher, was bei gleichbleibender Drehzahl der Antriebswelle eine entsprechende Erhöhung der Bandlaufgcschwindigkeit ergibt. Wird der Dehnungsgrad reduziert, ergibt sich entsprechend eine Reduzierung der Bandlaufgeschwindigkeit.

Um ein Überspringen von Zähnen zu vermeiden und einen sicheren Formschluss zwischen Antrieb und Zahnriemen zu gewährleisten, kann jeder Bandgurt durch eine Andrückeinrichtung, insbesondere eine oder mehrere Andrückrollen, in Eingriff mit der Antriebswelle oder mit einer von der Antriebswelle antreibbaren Antriebsrolle gehalten sein.

Gemäß einer weiteren Ausführungsform kann jede Einstellvorrichtung wenigstens eine verstellbare Spannrolle umfassen, wobei bevorzugt die Spannrolle im Wesentlichen rechtwinklig zu einer Produktförderrichtung verstellbar ist. Die Einstellung der Spannrolle kann dabei durch eine zu diesem Zweck vorgesehene Stelleinrichtung erfolgen. Um eine unerwünschte Beeinflussung des als Produktauflage dienenden Obertrums des Bandförderers zu vermeiden, ist die Spannrolle vorzugsweise am Untertrum des Bandförderers angeordnet. Durch eine Spannrolle kann die Spannung des Bandgurtes und somit dessen Dehnungsgrad schnell und exakt eingestellt werden.

Gemäß einer weiteren Ausgestaltung der Erfindung ist jedem Bandgurt ein oberer Bandgurt zugeordnet, der dazu ausgebildet ist, die Oberseite des Produktes zu beaufschlagen. Ein derartiger Zusatzbandgurt kann selbst ohne Antrieb und lediglich frei laufend ausgebildet sein, sodass die obere Bandeinheit eine Niederhaltefunktion ausübt, wodurch eine besonders zuverlässige Produktpositionierung, -halterung bzw. -führung während des Aufschneidens erreicht wird. Das aufzuschneidende Produkt wird also gewissermaßen zwischen zwei umlaufenden, einander gegenüberliegenden Bandgurten eingeklemmt und auf diese Weise gefördert. Es ist auch möglich, dass jeder obere Bandgurt antreibbar und dabei mit seinem als Produktauflage dienenden unteren Bandgurt, also seinem "Partner-Bandgurt", synchronisierbar ist. Das Produkt wird dann, insofern wie in dem eingangs genannten Stand der Technik, von dem unteren Bandgurt und dem oberen Bandgurt gemeinsam gefördert.

Die Lösung der Aufgabe erfolgt zum anderen durch ein Verfahren mit den Merkmalen des Anspruchs 14.

Bei dem erfindungsgemäßen Verfahren zum Aufschneiden von Lebensmittelprodukten werden mittels einer Produktzuführung, die mehrere parallel nebeneinander angeordnete Bandförderer umfasst, die jeweils einen als Produktauflage für ein aufzuschneidendes Produkt dienenden Endlosbandgurt umfassen, wobei die Bandgurte durch elastische Dehnung in der Länge veränderbar sind und in einem gedehnten Zustand umlaufen, gleichzeitig mehrere Produkte, die jeweils auf einem der Bandgurte aufliegen, einer Schneidebene zugeführt, in der sich wenigstens ein Schneidmesser, insbesondere rotierend und/oder umlaufend, bewegt. Die Bandgurte werden mittels eines gemeinsamen Antriebs angetrieben und der Dehnungsgrad jedes Bandgurtes und damit dessen Einzelfördergeschwindigkeit wird bei Bedarf individuell verändert, um für jedes Produkt die Dicke abzutrennender Produktscheiben individuell einzustellen.

Gemäß einer Ausführungsform wird der Dehnungsgrad jedes Bandgurtes in Abhängigkeit von der Kontur des Produktes verändert, wobei vorzugsweise die Kontur des Produktes mit einer in die Vorrichtung integrierten Erfassungseinrichtung ermittelt wird. Sobald also beim Aufschneiden des Produktes beispielsweise ein Produktbereich mit verringerter Querschnittsfläche an die Schneidebene gelangt, wird die Einzelfördergeschwindigkeit des betreffenden Bandförderers um einen entsprechenden Betrag erhöht, sodass im Ergebnis das Produktscheibengewicht unverändert bleibt. Der Schneidvorrichtung ist die Topographie des Produktes und damit der Konturverlauf des Produktes in Förderrichtung bekannt, womit auch bekannt ist, wann welche Produktquerschnittsfläche an die Schneidebene gelangt, sodass durch entsprechende Ansteuerung der Einstellvorrichtung eine jeweils gewünschte Scheibendicke produziert werden kann, und zwar - falls erwünscht - mit von Scheibe zu Scheibe variierender Scheibendicke. Das Prinzip der gezielten Veränderung des Produktvorschubs in Abhängigkeit von der Produktkontur an sich ist bekannt, sodass hierauf nicht näher eingegangen werden soll.

Die Erfindung wird im Folgenden unter Bezugnahme auf die Zeichnung beispielhaft beschrieben.
- Fig. 1: zeigt schematisch eine Draufsicht auf den Produktzufüh- rungsbereich einer erfindungsgemäßen Schneidvorrichtung.
- Fig. 2: zeigt schematisch eine Seitenansicht der Schneidvorrichtung gemäß Fig. 1.
- Fig. 3: zeigt schematisch eine Seitenansicht einer Schneidvorrichtung gemäß einer alternativen Ausführungsform der Erfindung.

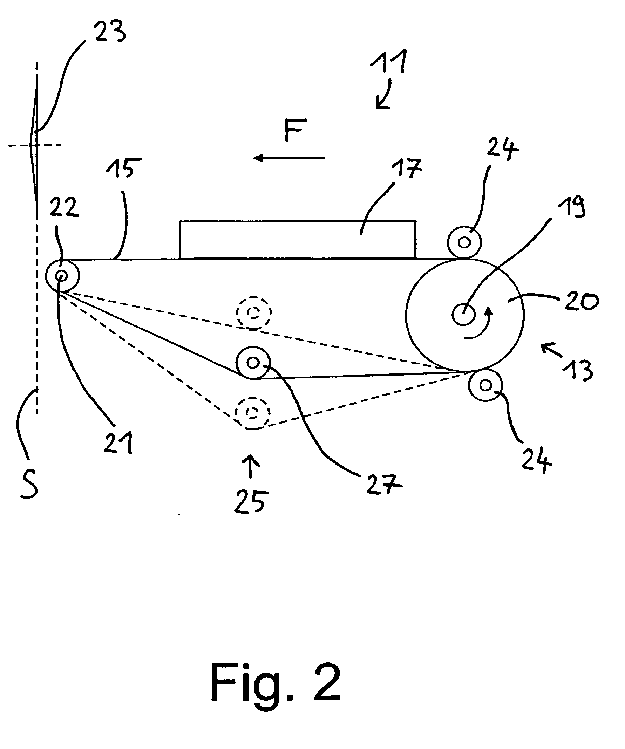

Die erfindungsgemäße Schneidvorrichtung umfasst eine Produktzuführung 11 mit in diesem Beispiel drei nebeneinander angeordneten und parallel zueinander ausgerichteten Bandförderern 13. Jeder der Bandförderer 13 umfasst einen Endlosbandgurt 15, der als Auflage für ein aufzuschneidendes Produkt 17 dient. Die Bandgurte 15 werden durch eine gemeinsame Antriebswelle 19 angetrieben, auf welcher Antriebsrollen 20 (Fig. 2) drehfest sitzen. Ferner laufen die Bandgurte 15 um eine Umlenkwelle 21 mit Umlenkrollen 22 (Fig. 2), wobei die Umlenkwelle 21 nahe einer Schneidebene S angeordnet ist. In der Schneidebene S läuft ein Schneidmesser 23 (Fig. 2) planetarisch um, wobei alternativ auch ein nicht-planetarisch umlaufendes, sondern lediglich rotierendes Schneidmesser, insbesondere ein Sichelmesser, Verwendung finden kann. Statt auf der gemeinsamen Umlenkwelle 21 können die Umlenkrollen 22 auch separat gelagert sein.

Durch Antreiben der Antriebsrollen 20 mittels der gemeinsamen Antriebswelle 19 werden die auf dem Obertrum der Bandförderer 13 aufliegenden Produkte 17 gleichzeitig und parallel zueinander entlang einer Produktförderrichtung F der Schneidebene S zugeführt.

Der Antrieb der Antriebsrollen 20 muss nicht direkt durch eine gemeinsame koaxiale Antriebswelle 19 erfolgen. Je nach Ausführungsform ist es z.B. auch möglich, dass unterschiedliche Getriebekomponenten als Zwischenglied zwischen der Antriebswelle 19 und der jeweiligen Antriebsrolle 20 vorgesehen sind. Die Antriebswelle 19 stellt jedoch letztlich einen gemeinsamen Antrieb für alle Bandförderer 13 dar.

Die Bandgurte 15 sind als elastisch dehnbare, d.h. in der Länge veränderliche, Zahnriemen ausgebildet und stehen in formschlüssigem Eingriff mit der jeweiligen Antriebsrolle 20. Zur Vereinfachung sind die Verzahnungen des Bandgurtes 15 sowie der Antriebsrolle 20 in Fig. 2 nicht dargestellt. Um einen Antriebsschlupf sicher zu vermeiden, drücken jeweils zwei Andrückrollen 24 den Bandgurt 15 gegen die Antriebsrolle 20.

Jedem der Bandgurte 15 ist eine Einstellvorrichtung 25 zugeordnet, mittels welcher der jeweilige Bandgurt 15 entweder zu einer größeren Länge gedehnt oder im Sinne einer Längenreduzierung entspannt werden kann. In einem Grundzustand der Produktzuführung 11 laufen alle Bandgurte 15 in gedehntem Zustand mit einer gemeinsamen Basisfördergeschwindigkeit um, sodass alle Produkte "gleich schnell sind" und die Dicke der abgetrennten Produktscheiben für alle Bandförderer 13 gleich ist. Da die Einzelfördergeschwindigkeit der Bandförderer 13 außer von der Drehzahl der Antriebswelle 19 auch von dem Dehnungsgrad des jeweiligen Bandgurtes 15 abhängt, kann durch Ansteuern der Einstellvorrichtungen 25 und dadurch herbeigeführte Dehnungsgradänderungen, also Abweichungen von dem erwähnten Grundzustand, an den Bandgurten 15 die Einzelfördergeschwindigkeit jedes Bandförderers 13 in Bezug auf den Wert der Basisfördergeschwindigkeit entweder erhöht oder erniedrigt werden. Diese individuelle Variation der Einzelfördergeschwindigkeiten der Bandgurte 15 erfolgt trotz des gemeinsamen Antriebs der Bandgurte 15 durch die mit konstanter Drehzahl rotierende gemeinsame Antriebswelle 19. Da jedem Bandförderer 13 eine eigene Einstellvorrichtung 25 zugeordnet ist, können die Einzelfördergeschwindigkeiten individuell variiert werden.

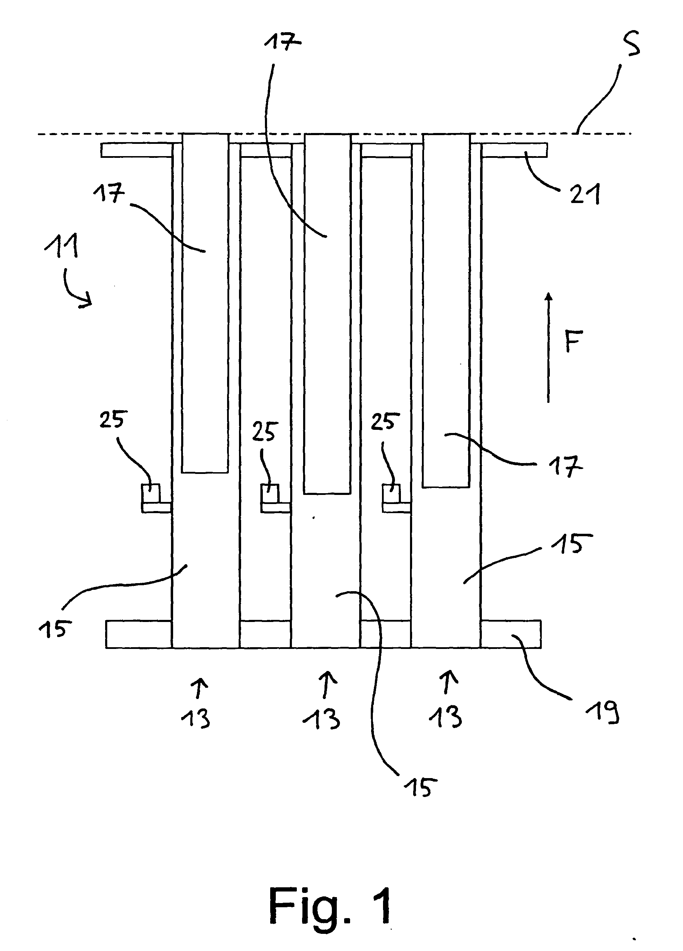

In Fig. 1 ist die individuelle Einstellung der Einzelfördergeschwindigkeiten durch eine unterschiedliche Stellung der Produkte 17 in Bezug auf die Schneidebene S veranschaulicht, wobei zum besseren Verständnis angenommen wird, dass die Produkte 17 ursprünglich die gleich Länge besaßen. Demgemäß eilt das in Fig. 1 links befindliche Produkt 17 momentan den anderen Produkten voraus, so dass es momentan die kleinste Restlänge besitzt. Da das Schneidmesser 23 (Fig. 2) mit konstanter Schneidfrequenz durch alle zugestellten Produkte 17 hindurchschneidet, fallen die von den Produkten 17 abgetrennten Produktscheiben umso dicker aus, je größer die Einzelfördergeschwindigkeit des jeweiligen Bandförderers 13 momentan ist.

Unter Bezugnahme auf Fig. 2 wird der den Einstellvorrichtungen 25 zugrundeliegende Mechanismus genauer erläutert. Jedem Bandförderer 13 ist eine Spannrolle 27 zugeordnet, die am Untertrum des Bandförderers 13 angeordnet und mittels eines Stellantriebs rechtwinklig zu der Produktförderrichtung F nach oben und unten verstellbar ist. Die in durchgezogenen Linien dargestellte Stellung der Spannrolle 27 entspricht dabei dem oben erwähnten Grundzustand, bei welchem der Bandgurt 15 mit einem vorbestimmten Dehnungsgrad umläuft. Durch Verstellen der Spannrolle 27 in die gestrichelt dargestellte untere Stellung kann der Dehnungsgrad des Bandgurtes 15 gegenüber dem Dehnungsgrad des Grundzustands erhöht werden. Eine derartige Erhöhung des Dehnungsgrads bewirkt eine Steigerung der Bandgeschwindigkeit und somit der Einzelfördergeschwindigkeit des Bandförderers 13 relativ zu der Basisfördergeschwindigkeit. In analoger Weise kann durch Verstellen der Spannrolle 27 in die ebenfalls gestrichelt dargestellte obere Stellung der Dehnungsgrad des Bandgurts 15 gegenüber dem Dehnungsgrad des Grundzustands verringert werden, wodurch eine entsprechende Verringerung der Einzelfördergeschwindigkeit des Bandförderers 13 relativ zu der Basisfördergeschwindigkeit bewirkt wird.

Insgesamt ist also eine individuelle Veränderung der Einzelfördergeschwindigkeit jedes der Bandförderer 13 innerhalb eines sich um die Basisfördergeschwindigkeit erstreckenden Bereichs ermöglicht. Der Verstellbereich ist durch die jeweiligen Maximalstellungen der Spannrolle 27 gegeben und bestimmt sich insbesondere durch die elastischen Eigenschaften des Bandgurtes 15. Der Variationsbereich der Einzelfördergeschwindigkeit ist beispielsweise durch eine Erhöhung und eine Verringerung der Basisfördergeschwindigkeit um jeweils maximal 20% definiert. Diese Variationsbreite ist für die Praxis ausreichend, da auf den einzelnen Bandförderern 13 normalerweise solche Produkte 17 gleichzeitig zu fördern und aufzuschneiden sind, die sich hinsichtlich ihrer äußeren Kontur, insbesondere des Verlaufes ihrer Querschnittsfläche in Längsrichtung, nur in einem Maße derart unterscheiden, dass zur Erzielung gewichtskonstanter Scheiben oder Portionen eine dafür erforderliche Variation der Scheibendicke durch vergleichsweise geringe relative Einzelfördergeschwindigkeitsänderungen erreicht werden kann.

Sollte aufgrund der Eigenschaften der aufzuschneidenden Produkte eine stärkere Anpassung der Bandlaufgeschwindigkeit erforderlich sein als durch den maximal möglichen Verstellhub der Spannrollen 27 bewerkstelligt werden kann, ist es jederzeit möglich, gewissermaßen einen gemeinsamen "offset" bzw. eine gemeinsame Grundzustandsverschiebung für alle Bandförderer 13 direkt über den gemeinsamen Antrieb zu realisieren, z.B. in dem hier angegebenen Ausführungsbeispiel durch eine Erhöhung oder Reduzierung der Drehzahl der Antriebswelle 19.

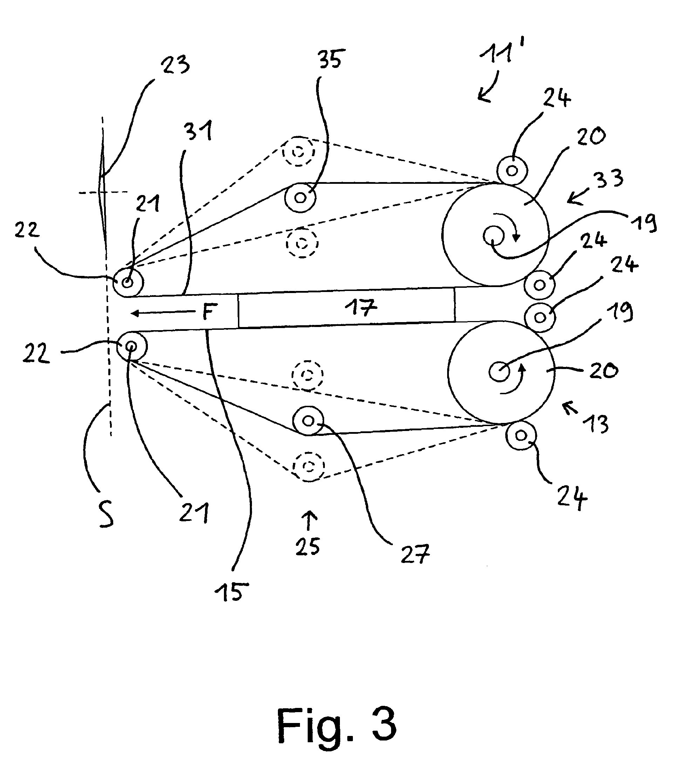

Fig. 3 zeigt eine alternative Ausführungsform der Erfindung. Bei der Produktzuführung 11' ist jedem Bandgurt 15 ein oberer Bandgurt 31 zugeordnet, welcher die Oberseite des Produkts 17 beaufschlagt und so für eine zuverlässigere Produktführung während des Fördervorgangs sorgt. Das zu fördernde Produkt 17 ist zwischen den gegenüberliegenden Bandgurten 15, 31 eingeklemmt. Der obere Bandgurt 31 ist einem oberen Bandförderer 33 zugeordnet, welcher in Analogie zu dem unteren Bandförderer 13 aufgebaut ist und ebenfalls eine verstellbare Spannrolle 35 umfasst. Damit die Laufgeschwindigkeit der beiden das Produkt 17 gemeinsam zuführenden Trums gleich groß ist, ist der obere Bandförderer 33 synchron zu dem unteren Bandförderer 33 angetrieben, wobei die Synchronisicrung insbesondere dadurch erreicht wird, dass die obere Spannrolle 35 bei einer Verstellung der unteren Spannrolle 27 stets um den gleichen Betrag in die entgegengesetzte Richtung verstellt wird. Dies kann entweder mittels eines entsprechend angesteuerten eigenen Stellantriebs erreicht werden oder durch eine geeignete mechanische Kopplung der beiden Spannrollen 27, 35. Entsprechend sind auch die beiden Antriebswellen 19 synchronisiert.

Alternativ kann vorgesehen sein, dass der obere Bandförderer 33 keinen Antrieb aufweist und der obere Bandgurt 31 lediglich frei umläuft.

Dadurch, dass erfindungsgemäß die Einzelfördergeschwindigkeiten individuell einstellbar sind, können die Dicken der abgetrennten Produktscheiben für jeden Bandförderer 13 individuell angepasst werden, ohne dass deshalb für jeden Bandförderer 13 ein eigener Antrieb vorzusehen wäre. Der Aufwand und die Kosten zur Bereitstellung der erfindungsgemäßen Produktzuführung 11 und somit des gesamten Slicers können somit gesenkt werden. Insbesondere kann trotz in Produktlängsrichtung variierender Produktquerschnittsflächen ein konstantes Scheiben- oder Portionsgewicht bei allen gleichzeitig zugeführten Produkten 17 sichergestellt werden.

### Bezugszeichenliste:

- 11, 11': Produktzuführung
- 13: Bandförderer
- 15: Bandgurt
- 17: Produkt
- 19: Antriebswelle
- 20: Antriebsrolle
- 21: Umlenkwelle
- 22: Umlenkrolle
- 23: Schneidmesser
- 24: Andrückrolle
- 25: Einstellvorrichtung
- 27: Spannrolle
- 31: oberer Bandgurt
- 33: oberer Bandförderer
- 35: obere Spannrolle

- S: Schneidebene
- F: Produktförderrichtung

## Patentansprüche

1. Vorrichtung zum Aufschneiden von Lebensmittelprodukten, insbesondere Hochleistungs-Slicer, mit
einer Produktzuführung (11, 11'), die mehrere parallel nebeneinander angeordnete Bandförderer (13) umfasst, die jeweils einen als Produktauflage für ein aufzuschneidendes Produkt (17) dienenden Endlosbandgurt (15) umfassen und gemeinsam antreibbar sind, um gleichzeitig mehrere Produkte (17), die jeweils auf einem der Bandgurte (15) aufliegen, einer Schneidebene (S) zuzuführen, in der sich wenigstens ein Schneidmesser (23), insbesondere rotierend und/oder umlaufend, bewegt,
wobei die Bandförderer (13) einen gemeinsamen Antrieb aufweisen, der eine Antriebswelle (19) umfasst, durch welche die auf den Bandgurten (15) aufliegenden Produkte (17) der Schneidebene (S) mit einer gemeinsamen Basisfördergeschwindigkeit zuführbar sind,
**dadurch gekennzeichnet,**
**dass** die Bandgurte (15) durch elastische Dehnung in der Länge veränderbar sind und in einem gedehnten Zustand umlaufen, sodass die Einzelfördergeschwindigkeit jedes Bandgurtes (15) außer von der Drehzahl der Antriebswelle (19) auch von dessen Dehnungsgrad abhängig ist, und
wobei jedem Bandgurt (15) eine Einstellvorrichtung (25) zugeordnet ist, die dazu ausgebildet ist, den Dehnungsgrad des Bandgurtes (15) und damit dessen Einzelfördergeschwindigkeit individuell zu verändern.

2. Vorrichtung nach Anspruch 1,
**dadurch gekennzeichnet,**
**dass** jede Einstellvorrichtung (25) dazu ausgebildet ist, den Dehnungsgrad des Bandgurtes (15) durch Verkleinern und Vergrößern des Laufweges für den Bandgurt (15) zu verändern.

3. Vorrichtung nach Anspruch 1 oder 2,
**dadurch gekennzeichnet ,**
**dass** jede Einstellvorrichtung (25) eine Spannvorrichtung für den Bandgurt (25) umfasst.

4. Vorrichtung nach zumindest einem der vorstehenden Ansprüche,
**dadurch gekennzeichnet ,**
**dass** der Dehnungsgrad jedes Bandgurtes (15) während des Aufschneidebetriebs bei umlaufendem Bandgurt (15) veränderbar ist.

5. Vorrichtung nach zumindest einem der vorstehenden Ansprüche,
**dadurch gekennzeichnet ,**
**dass** für jeden Bandgurt (15) dessen Einzelfördergeschwindigkeit mittels der Einstellvorrichtung (25) in einem Bereich veränderbar ist, dessen Grenzen **dadurch** bestimmt sind, dass die Basisfördergeschwindigkeit um ein bestimmtes maximales Maß reduzierbar und erhöhbar ist.

6. Vorrichtung nach Anspruch 5,
**dadurch gekennzeichnet ,**
**dass** die Basisfördergeschwindigkeit um bis zu 20 % reduzierbar und um bis zu 20 % erhöhbar ist.

7. Vorrichtung nach zumindest einem der vorstehenden Ansprüche,
**dadurch gekennzeichnet,**
**dass** der Dehnungsgrad jedes Bandgurtes (15) stufenlos veränderbar ist.

8. Vorrichtung nach zumindest einem der vorstehenden Ansprüche,
**dadurch gekennzeichnet ,**
**dass** jeder Bandgurt (15) in formschlüssigem Eingriff mit der Antriebswelle (19) oder mit einer von der Antriebswelle (19) antreibbaren Antriebsrolle (20) steht.

9. Vorrichtung nach zumindest einem der vorstehenden Ansprüche,
**dadurch gekennzeichnet,**
**dass** jeder Bandgurt (15) als Zahnriemen ausgebildet ist.

10. Vorrichtung nach zumindest einem der vorstehenden Ansprüche,
**dadurch gekennzeichnet,**
**dass** jeder Bandgurt (15) durch eine Andrückeinrichtung (24), insbesondere eine oder mehrere Andrückrollen (24), in Eingriff mit der Antriebswelle (19) oder mit einer von der Antriebswelle (19) antreibbaren Antriebsrolle (20) gehalten ist.

11. Vorrichtung nach zumindest einem der vorstehenden Ansprüche,
**dadurch gekennzeichnet ,**
**dass** jede Einstellvorrichtung (25) wenigstens eine verstellbare Spannrolle (27) umfasst, wobei bevorzugt die Spannrolle (27) im Wesentlichen rechtwinklig zu einer Produktförderrichtung (F) verstellbar ist.

12. Vorrichtung nach zumindest einem der vorstehenden Ansprüche,
**dadurch gekennzeichnet,**
**dass** jedem Bandgurt (15) ein oberer Bandgurt (31) zugeordnet ist, der dazu ausgebildet ist, die Oberseite des Produktes (17) zu beaufschlagen.

13. Vorrichtung nach zumindest einem der vorstehenden Ansprüche,
**dadurch gekennzeichnet ,**
**dass** jeder obere Bandgurt (31) antreibbar und mit seinem als Produktauflage dienenden Bandgurt (15) synchronisierbar ist.

14. Verfahren zum Aufschneiden von Lebensmittelprodukten, insbesondere mittels einer Vorrichtung nach einem der vorhergehenden Ansprüche, bei dem
- mittels einer Produktzuführung (11, 11'),
die mehrere parallel nebeneinander angeordnete Bandförderer (13) umfasst, die jeweils einen als Produktauflage für ein aufzuschneidendes Produkt (17) dienenden Endlosbandgurt (15) umfassen,
gleichzeitig mehrere Produkte (17), die jeweils auf einem der Bandgurte (15) aufliegen, einer Schneidebene (S) zugeführt werden, in der sich wenigstens ein Schneidmesser (23), insbesondere rotierend und/oder umlaufend, bewegt, und
- die Bandgurte (15) mittels eines gemeinsamen, eine, insbesondere gemeinsame, Antriebswelle (19) für die Bandgurte (15) umfassenden, Antriebs angetrieben werden,
**dadurch gekennzeichnet, dass**
die Bandgurte (15) durch elastische Dehnung in der Länge veränderbar sind und in einem gedehnten Zustand umlaufen,
- der Dehnungsgrad jedes Bandgurtes (15) und damit dessen Einzelfördergeschwindigkeit bei Bedarf individuell verändert wird, um für jedes Produkt (17) die Dicke abzutrennender Produktscheiben individuell einzustellen.

15. Verfahren nach Anspruch 14,
**dadurch gekennzeichnet,**
**dass** der Dehnungsgrad jedes Bandgurts (15) in Abhängigkeit von der Kontur des Produktes (17) verändert wird, wobei vorzugsweise die Kontur des Produktes (17) mit einer in die Vorrichtung integrierten Erfassungseinrichtung ermittelt wird.

## Claims

1. An apparatus for the slicing of food products, in particular a high-performance slicer, comprising
a product feed (11, 11') which includes a plurality of belt conveyors (13) which are arranged parallel next to one another, which each include an endless belt (15) serving as a product support for a product (17) to be sliced and which can be driven together in order simultaneously to feed a plurality of products (17) which each lie on one of the belts (15) to a cutting plane (S) in which at least one cutting blade (23) moves, in particular in a rotating and/or circulating manner,
wherein the belt conveyors (13) have a common drive which includes a drive shaft (19) by which the products (17) lying on the belts (15) can be fed to the cutting plane (S) at a common base conveying speed;
**characterized in that**
the belts (15) are changeable in length by elastic stretching and circulate in a stretched state so that the individual conveying speed of each belt (15) is dependent not only on the speed of the drive shaft (19), but also on the degree of stretching of the belt; and wherein each belt (15) has a setting apparatus (25) associated with it which is made to individually change the degree of stretching of the belt (15) and thus its individual conveying speed.

2. An apparatus in accordance with claim 1, **characterized in that** each setting apparatus (25) is made to change the degree of stretching of the belt (15) by decreasing and increasing the running path for the belt (15).

3. An apparatus in accordance with claim 1 or claim 2, **characterized in that** each setting apparatus (25) includes a clamping apparatus for the belt (25).

4. An apparatus in accordance with at least one of the preceding claims, **characterized in that** the degree of stretching of each belt (15) is changeable during the slicing operation with a circulating belt (15).

5. An apparatus in accordance with at least one of the preceding claims, **characterized in that**, for each belt (15), its individual conveying speed is changeable by means of the setting apparatus (25) in a range whose limits are determined **in that** the base conveying speed can be decreased and increased by a specific maximum degree.

6. An apparatus in accordance with claim 5, **characterized in that** the base conveying speed can be decreased by up to 20% and can be increased by up to 20%.

7. An apparatus in accordance with at least one of the preceding claims, **characterized in that** the degree of stretching of each belt (15) can be changed in a stepless manner.

8. An apparatus in accordance with at least one of the preceding claims, **characterized in that** each belt (15) is in form-fitted engagement with the drive shaft (19) or with a drive roller (20) drivable by the drive shaft (19).

9. An apparatus in accordance with at least one of the preceding claims, **characterized in that** each belt (15) is made as a toothed belt.

10. An apparatus in accordance with at least one of the preceding claims, **characterized in that** each belt (15) is in engagement with the drive shaft (19) or with a drive roller (20) drivable by the drive shaft (19) by a pressing device (24), in particular by one or more pressing rollers (24).

11. An apparatus in accordance with at least one of the preceding claims, **characterized in that** each setting device (25) includes at least one adjustable clamping roller (27), with the clamping roller (27) preferably being adjustable substantially at right angles to a product conveying direction (F).

12. An apparatus in accordance with at least one of the preceding claim, **characterized in that** each belt (15) has an upper belt (31) associated with it which is made to act on the upper side of the product (17).

13. An apparatus in accordance with at least one of the preceding claims, **characterized in that** each upper belt (31) is drivable and can be synchronized with its belt (15) serving as a product support.

14. A method for the slicing of food products, in particular by means of an apparatus in accordance with any one of the preceding claims, wherein
- by means of a product feed (11, 11'),
which includes a plurality of belt conveyors (13) which are arranged parallel next to one another and which in each case include an endless belt (15) serving as a product support for a product (17) to be sliced;
a plurality of products (17) which each lie on one of the belts (15), are simultaneously fed to a cutting plane (S) in which at least one cutting blade (23) moves, in particular in a rotating and/or circulating manner; and
- the belts (15) are driven by means of a common drive including a drive shaft (19), in particular a common drive shaft, for the belts (15),
**characterized in that**
- the belts (15) are changeable in length by elastic stretching and circulate in a stretched state
- the degree of stretching of each belt (15) and thus its individual conveying speed is individually changed as required to set the thickness of product slices to be cut off individually for each product (17).-

15. A method in accordance with claim 14, **characterized in that** the degree of stretching of each belt (15) is changed in dependence on the contour of the product (17), with the contour of the product (17) preferably being determined using a detection device integrated into the apparatus.

## Revendications

1. Appareil pour découper des produits alimentaires, en particulier trancheuse à haute performance, comprenant
une amenée de produits (11, 11') qui comprend plusieurs convoyeurs à bande (13) agencés parallèlement les uns à côté des autres, qui comprennent chacun une courroie à bande sans fin (15) servant de support pour un produit à découper (17) et qui sont susceptibles d'être entraînées conjointement, afin d'amener simultanément plusieurs produits (17), qui reposent chacun sur l'une des courroies à bande (15), à un plan de coupe (S) dans lequel se déplace au moins un couteau de coupe (23), en particulier en rotation et/ou en recirculation,
dans lequel les convoyeurs à bande (13) comprennent un entraînement commun, lequel comprend un arbre d'entraînement au moyen duquel les produits (17) qui reposent sur les courroies à bande (15) peuvent être amenés au plan de coupe (S) avec une vitesse de convoyage de base commune,
**caractérisé en ce que**
les courroies à bande (15) peuvent être modifiées en longueur par allongement élastique et tournent dans un état allongé, de sorte que la vitesse de convoyage individuelle de chaque courroie à bande (15) dépend, outre de la vitesse de rotation de l'arbre d'entraînement (19), également de son degré d'allongement, et
dans lequel un dispositif de réglage (25) est associé à chaque courroie à bande (15), celui-ci étant réalisé pour modifier individuellement le degré d'allongement de la courroie à bande (15) et ainsi sa vitesse de convoyage individuelle.

2. Appareil selon la revendication 1,
**caractérisé en ce que** chaque dispositif de réglage (25) est réalisé pour modifier le degré d'allongement de la courroie à bande (15) par diminution et agrandissement du trajet de déplacement pour la courroie à bande (15).

3. Dispositif selon la revendication 1 ou 2,
**caractérisé en ce que** chaque dispositif de réglage (25) comprend un dispositif de serrage pour la courroie à bande (25).

4. Dispositif selon l'une au moins des revendications précédentes,
**caractérisé en ce que** le degré d'allongement de chaque courroie à bande (15) peut être modifié pendant le fonctionnement en découpe alors que la courroie à bande (15) est en recirculation.

5. Dispositif selon l'une au moins des revendications précédentes,
**caractérisé en ce que**, pour chaque courroie à bande (15), sa vitesse de convoyage individuelle peut être modifiée au moyen d'un dispositif de réglage (25) dans une plage dont les limites sont déterminées du fait que la vitesse de convoyage de base peut être réduite et augmentée d'une valeur maximum déterminée.

6. Dispositif selon la revendication 5,
**caractérisé en ce que** la vitesse de convoyage de base peut être réduite jusqu'à 20 % et peut être augmentée jusqu'à 20 %.

7. Dispositif selon l'une au moins des revendications précédentes,
**caractérisé en ce que** le degré d'allongement de chaque courroie à bande (15) peut être modifié de façon continue.

8. Dispositif selon l'une au moins des revendications précédentes,
**caractérisé en ce que** chaque courroie à bande (15) est en engagement en coopération de formes avec l'arbre d'entraînement (19) ou avec un galet d'entraînement (20) susceptible d'être entraîné par l'arbre d'entraînement (19).

9. Dispositif selon l'une au moins des revendications précédentes,
**caractérisé en ce que** chaque courroie à bande (15) est réalisée sous forme de courroie dentée.

10. Dispositif selon l'une au moins des revendications précédentes,
**caractérisé en ce que** chaque courroie à bande (15) est maintenue, par un système de pressage (24) et en particulier par un ou plusieurs galets de pressage (24), en engagement avec l'arbre d'entraînement (19) ou avec un galet d'entraînement (20) susceptible d'être entraîné par l'arbre d'entraînement (19).

11. Dispositif selon l'une au moins des revendications précédentes,
**caractérisé en ce que** chaque dispositif de réglage (25) comprend au moins un rouleau tendeur réglable (27), et le rouleau tendeur (27) est de préférence réglable sensiblement perpendiculairement à une direction de convoyage (F) des produits.

12. Dispositif selon l'une au moins des revendications précédentes,
**caractérisé en ce qu'**une courroie à bande supérieure (31) est associée à chaque courroie à bande (15), laquelle est réalisée pour solliciter la face supérieure du produit (17).

13. Dispositif selon l'une au moins des revendications précédentes,
**caractérisé en ce que** chaque courroie à bande supérieure (31) est susceptible d'être entraînée et d'être synchronisée avec sa courroie à bande (15) qui sert de support pour les produits.

14. Procédé pour découper des produits alimentaires, en particulier au moyen d'un dispositif selon l'une des revendications précédentes, dans lequel
- au moyen d'une amenée de produits (11, 11') qui comprend plusieurs convoyeurs à bande (13) agencés parallèlement les uns à côté des autres et qui comprennent respectivement une courroie à bande sans fin (15) servant comme support de produit pour un produit à découper (17),
plusieurs produits (17) qui reposent respectivement sur l'une des courroies à bande (15), sont amenés simultanément à un plan de coupe (S) dans lequel se déplace, en particulier en rotation et/ou en recirculation, au moins un couteau de coupe (23), et
- les courroies à bande (15) sont entraînées au moyen d'un entraînement commun, qui comprend en particulier un arbre d'entraînement commun (19) pour les courroies à bande (15),
**caractérisé en ce que**
le degré d'allongement de chaque courroie à bande (15) et ainsi sa vitesse de convoyage individuelle est modifié(e) en cas de besoin individuellement, afin de régler individuellement pour chaque produit (17) l'épaisseur des tranches de produits à séparer.

15. Procédé selon la revendication 14,
**caractérisé en ce que** le degré d'allongement de chaque courroie à bande (15) est modifié en fonction du contour du produit (17), et le contour du produit (17) est de préférence déterminé avec un système de détection intégré dans le dispositif.
